# EUROPEAN PATENT APPLICATION

(11) **EP 4 668 142 A1**
(43) Date of publication of application: **24.12.2025**
(21) Application number: 23922705.1
(22) Date of filing: 16.02.2023
(51) Int. Cl.: G06F 21/32, G06F 21/45

(54) **INFORMATION PROCESSING DEVICE, INFORMATION PROCESSING SYSTEM, INFORMATION PROCESSING METHOD, AND STORAGE MEDIUM**

(71) Applicant: NEC CORPORATION, Minato-ku, Tokyo 108-8001 (JP)
(72) Inventor: UEMURA, Yuya, Tokyo 108-8001 (JP); KIKUCHI, Masaya, Tokyo 108-8001 (JP); SEKINE, Hiroshi, Tokyo 108-8001 (JP)
(74) Representative: Betten & Resch
(86) International application number: PCT/JP2023/005443
(87) International publication number: WO 2024/171368

(57) **Abstract**

The present invention registers concealed biological information of a subject person concealed by using a cancelable conversion key. When the subject person has conducted a monetary consumption activity one or more times, authentication is performed by using biological information newly obtained from the subject person, the cancelable conversion key, and the registered concealed biological information. If the authentication is successful, consumption subject information indicating the subject of the consumption activity and a concealed face image obtained by concealing a face image of the consumption subject person who conducted the consumption activity by means of an encryption key corresponding to the consumption subject person are registered in association with the concealed biological information. At the time of settling payment collectively in relation to the consumption subject information indicating consumption subjects, authentication of the subject person is performed by using biological information of the subject person stored in advance in a storage means carried by the subject person and newly obtained biological information of the subject person. If the authentication is successful, the consumption subject information and the face image of the consumption subject person, the concealment of which has been canceled by means of the encryption key, are presented to the subject person.

## Description

### Technical Field

The present disclosure relates to an information processing device, an information processing system, an information processing method, and a storage medium.

### Background Art

PTL 1 discloses a technique of collectively making a payment without performing payment processing in each store in a facility where a plurality of stores exists.

### Citation List

### Patent Literature

PTL 1: JP 2018-41181 A

### Summary of Invention

### Technical Problem

Incidentally, there is a case where a product is purchased using biometric information on a purchaser when the product is purchased at a plurality of stores as described above. In this case, it is necessary to store the biometric information on the purchaser for authentication or the like. Storing the biometric information has a high risk of leakage of the biometric information, and there is a demand for a technology without a risk of information leakage regarding the biometric information in the above-described technology for payment.

An object of the present disclosure is to provide an information processing device, an information processing system, an information processing method, and a program that solve the above problems. Solution to Problem

According to a first aspect of the present disclosure, an information processing device includes biometric information registration means for registering concealed biometric information on a subject concealed by a cancelable conversion key, authentication means for performing authentication using biometric information newly acquired from the subject, the cancelable conversion key, and the registered concealed biometric information in a case where the subject has performed one or a plurality of monetary consumption activities, consumption target information registration means for registering, in a case where the authentication is successful, consumption target information indicating a target of the consumption activity and a concealed face image obtained by concealing a face image of a consumption subject who has performed the consumption activity with an encryption key associated to the consumption subject, in association with the concealed biometric information, and confirmation means for authenticating the subject using biometric information on the subject recorded in advance in storage means carried by the subject and newly acquired biometric information on the subject when payment related to the consumption target information is collectively performed, and presenting the consumption target information and a face image of the consumption subject unconcealed from the concealed face image by the encryption key to the subject when the authentication is successful.

According to a second aspect of the present disclosure, an information processing method includes registering concealed biometric information on a subject concealed by a cancelable conversion key, performing authentication using biometric information newly acquired from the subject, the cancelable conversion key, and the registered concealed biometric information in a case where the subject has performed one or a plurality of monetary consumption activities, registering, in a case where the authentication is successful, consumption target information indicating a target of the consumption activity and a concealed face image obtained by concealing a face image of a consumption subject who has performed the consumption activity with an encryption key associated to the consumption subject, in association with the concealed biometric information, and authenticating the subject using biometric information on the subject recorded in advance in storage means carried by the subject and newly acquired biometric information on the subject when payment related to the consumption target information is collectively performed, and presenting the consumption target information and a face image of the consumption subject unconcealed from the concealed face image by the encryption key to the subject when the authentication is successful.

According to a third aspect of the present disclosure, an information processing system includes biometric information registration means for registering concealed biometric information on a subject concealed by a cancelable conversion key, authentication means for performing authentication using biometric information newly acquired from the subject, the cancelable conversion key, and the registered concealed biometric information in a case where the subject has performed one or a plurality of monetary consumption activities, consumption target information registration means for registering, in a case where the authentication is successful, consumption target information indicating a target of the consumption activity and a concealed face image obtained by concealing a face image of a consumption subject who has performed the consumption activity with an encryption key associated to the consumption subject, in association with the concealed biometric information, and confirmation means for authenticating the subject using biometric information on the subject recorded in advance in storage means carried by the subject and newly acquired biometric information on the subject when payment related to the consumption target information is collectively performed, and presenting the consumption target information and a face image of the consumption subject unconcealed from the concealed face image by the encryption key to the subject when the authentication is successful.

According to a fourth aspect of the present disclosure, a storage medium storing a program for causing a computer of an information processing device to function as biometric information registration means for registering concealed biometric information on a subject concealed by a cancelable conversion key, authentication means for performing authentication using biometric information newly acquired from the subject, the cancelable conversion key, and the registered concealed biometric information in a case where the subject has performed one or a plurality of monetary consumption activities, consumption target information registration means for registering, in a case where the authentication is successful, consumption target information indicating a target of the consumption activity and a concealed face image obtained by concealing a face image of a consumption subject who has performed the consumption activity with an encryption key associated to the consumption subject, in association with the concealed biometric information, and confirmation means for authenticating the subject using biometric information on the subject recorded in advance in storage means carried by the subject and newly acquired biometric information on the subject when payment related to the consumption target information is collectively performed, and presenting the consumption target information and a face image of the consumption subject unconcealed from the concealed face image by the encryption key to the subject when the authentication is successful.

### Brief Description of Drawings

[Fig. 1] Fig. 1 is a schematic block diagram of an information processing system according to an example embodiment of the present disclosure.
[Fig. 2] Fig. 2 is a first diagram illustrating a flow of a collective payment method using the information processing system according to the example embodiment of the present disclosure.
[Fig. 3] Fig. 3 is a second diagram illustrating a flow of a collective payment method using the information processing system according to the example embodiment of the present disclosure.
[Fig. 4] Fig. 4 is a functional block diagram of an information processing device according to an example embodiment of the present disclosure.
[Fig. 5] Fig. 5 is a diagram illustrating a processing flow of the information processing system according to the example embodiment of the present disclosure.
[Fig. 6] Fig. 6 is a functional block diagram illustrating a minimum configuration of the information processing device according to the example embodiment of the present disclosure.
[Fig. 7] Fig. 7 is a diagram illustrating a processing flow by the information processing device having a minimum configuration according to the example embodiment of the present disclosure.
[Fig.8] Fig. 8 is a block diagram schematically illustrating a hardware configuration example of a calculation processing device capable of achieving the information processing device, a first registration device, a second registration device, and a payment device according to each example embodiment of the present disclosure.

### Example Embodiment

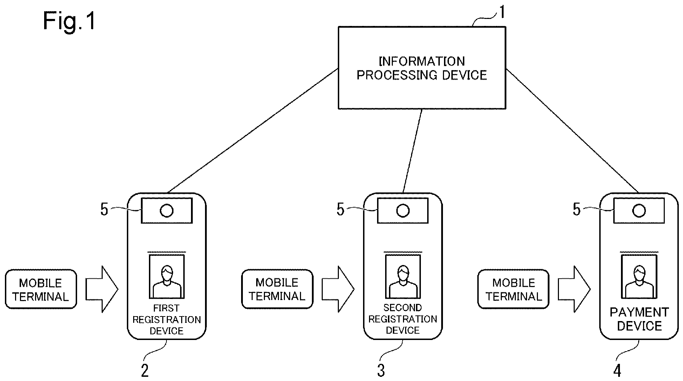

Fig. 1 is a schematic block diagram of an information processing system according to an example embodiment of the present disclosure. As illustrated in Fig. 1, an information processing device 1 is communicably connected to a first registration device 2, a second registration device 3, and a payment device 4. The first registration device 2 is installed at an entrance of a facility having a plurality of stores and the like. The second registration device 3 is installed in a plurality of stores in a facility, a place where a service is provided, or the like. The payment device 4 is installed at an exit of the facility or the like. The facility may be any facility as long as it is a facility having a plurality of stores or service providing places, such as an amusement park or a shopping mall. Each of the first registration device 2, the second registration device 3, and the payment device 4 includes an imaging device 5. The imaging device 5 images biometric information on a subject who purchases a product or receives a service in a store. The biometric information is a face of the subject. The biometric information may be biometric information on a subject other than the face. The first registration device 2 and the payment device 4 may be the same device. In a case where the entrance and the exit of the facility are the same, the first registration device 2 and the payment device 4 may be the same device.

The first registration device 2, the second registration device 3, and the payment device 4 can read information stored or displayed on a recording medium capable of storing information such as a credit card or a credit card possessed by the subject, a mobile terminal, or the like. As an example, the recording medium is assumed to be a mobile terminal 6 (smartphone) possessed by the subject. The first registration device 2, the second registration device 3, and the payment device 4 acquire the biometric information on the subject stored in the mobile terminal 6. Means for the first registration device 2, the second registration device 3, and the payment device 4 to acquire information from the mobile terminal 6 may be any means. As an example, the first registration device 2, the second registration device 3, and the payment device 4 wirelessly communicate with the mobile terminal 6 by a wireless technology such as Bluetooth to acquire the biometric information stored in the mobile terminal 6.

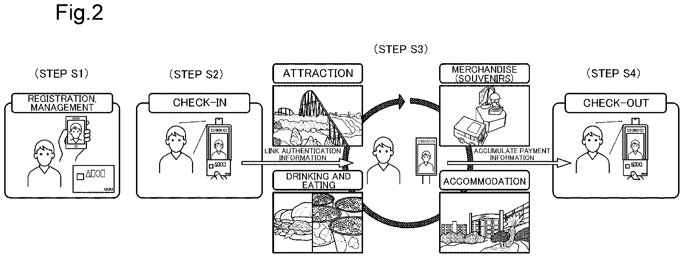

Fig. 2 is a first diagram illustrating a flow of a collective payment method using the information processing system according to the example embodiment of the present disclosure.

First, the subject who uses the facility images his/her face using a dedicated application installed in the mobile terminal 6 and registers his/her face information (step S1). The face information is an example of biometric information.

Then, when the subject uses the facility (at the time of check in), the subject causes the first registration device 2 to read and deliver the face information stored in the mobile terminal 6, and performs identity confirmation (step S2). The first registration device 2 registers the biometric information on the user in the information processing device 1.

In a case where the subject purchases a product at each store in the facility or uses a service in a monetary consumption activity, the subject registers consumption target information indicating trade information on the product or use information on the service using the second registration device 3 (step S3). The consumption target information is stored in the information processing device 1. The consumption target information includes an identifier of a product or a service, a price of a product or a service provision, and the like.

When the subject leaves the facility (at the time of check out), the subject collectively makes a payment using the payment device 4 (step S4).

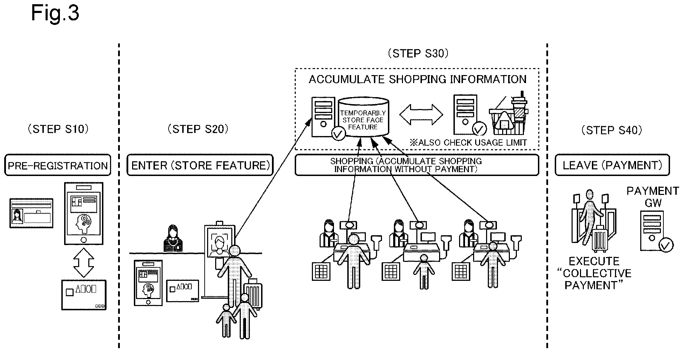

Fig. 3 is a second diagram illustrating a flow of a collective payment method using the information processing system according to the example embodiment of the present disclosure.

A processing flow of the information processing system according to the present example embodiment will be described in more detail. First, as pre-registration work, the subject images his/her face using a dedicated application installed in the mobile terminal 6 and registers his/her face information. The face information may be feature information on a face. The mobile terminal 6 stores the face information on the subject and the credit card information in association with each other (step S10).

At the time of check in, the subject causes the first registration device 2 to read and deliver the face information stored in the mobile terminal 6, and images the face of the subject with the imaging device 5 provided in the first registration device 2. The first registration device 2 compares the face information read from the terminal 6 with the face information imaged by the imaging device 5 to perform identity confirmation. The first registration device 2 conceals the face information on the subject and registers the face information in the information processing device 1 (step S20). As a result, the feature information on the face of the subject is temporarily stored on the facility side when entering the facility. At this time, the first registration device 2 may register, in the information processing device 1, information in which information is set, such as association information between face information on a companion (for example, a family member or the like) of the subject and face information or credit card information on the subject, and information on a usage limit indicating an upper limit of the amount of money that can be used in the facility.

**In** a case where a consumption subject such as a subject or a companion purchases a product or uses a service at each store, the consumption subject images the face using the imaging device 5 provided in the second registration device 3. The second registration device 3 registers the concealed biometric information on the consumption subject, the consumption target information, and the concealed face image on the consumption subject in association with each other in the information processing device 1 (step S30).

The information processing device 1 makes a collective payment by using consumption target information on the subject or the companion when the subject leaves a facility. The information processing device 1 discards the stored concealed biometric information and the like (step S40).

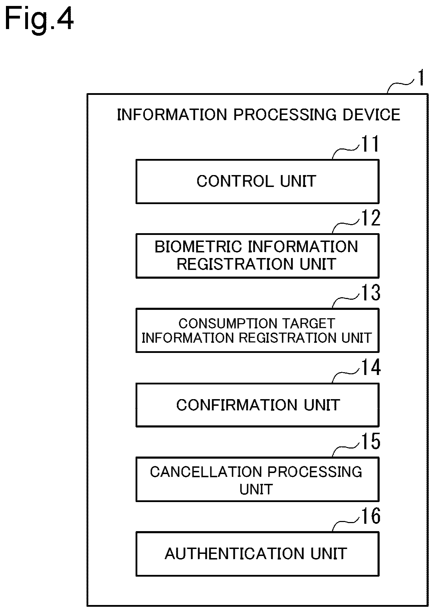

Fig. 4 is a functional block diagram of an information processing device according to an example embodiment of the present disclosure. The information processing device 1 executes a predetermined program. As a result, the information processing device 1 exerts functions of the control unit 11, the biometric information registration unit 12, the consumption target information registration unit 13, the confirmation unit 14, and the cancellation processing unit 15.

The control unit 11 controls other functional units of the information processing device 1.

The biometric information registration unit 12 registers the concealed biometric information on the subject concealed by the cancelable conversion key. The biometric information registration unit 12 may register concealed biometric information on the subject concealed by the cancelable conversion key and concealed biometric information on a companion of the subject concealed by the cancelable conversion key in association with each other.

In a case where the authentication of the consumption subject such as the subject and the companion is successful, the consumption target information registration unit 13 registers the consumption target information indicating the target of the consumption activity and the concealed face image obtained by concealing the face image of the consumption subject who has performed the consumption activity with the encryption key associated to the consumption subject in association with the concealed biometric information.

When collectively paying the consumption target information indicating the consumption target, the confirmation unit 14 authenticates the subject using the biometric information on the subject recorded in advance in the storage means carried by the subject and the newly acquired biometric information on the subject. In a case where the authentication is successful, the confirmation unit 14 may present the consumption target information and the face image of the consumption subject unconcealed with the encryption key to the subject.

The confirmation unit 14 may acquire a confirmation request for a face image associated to a predetermined request from the subject, and may present the face image of the consumption subject to the subject in a case where the authentication is successful. The cancellation processing unit 15 performs cancellation processing on the cancelable conversion key when predetermined cancellation related to the biometric information is activated. The cancellation processing unit 15 may perform processing of deleting the registered biometric information.

The authentication unit 16 authenticates the subject and the companion. As an example, in a case where the subject performs one or a plurality of monetary consumption activities, the authentication unit 16 performs authentication using the biometric information newly acquired from the subject or the companion, the cancelable conversion key, and the registered concealed biometric information.

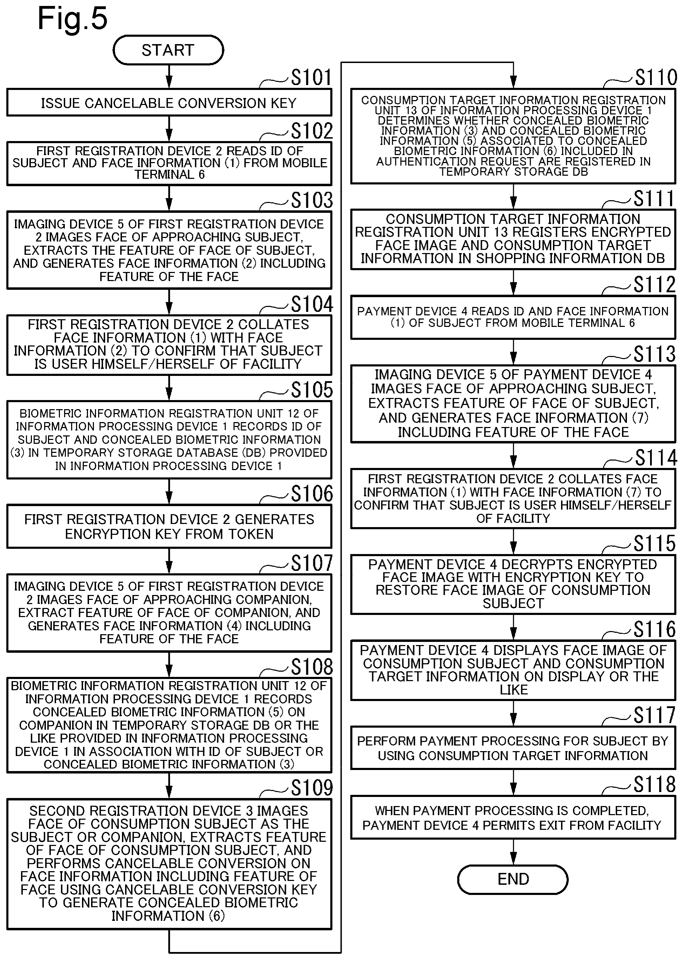

Fig. 5 is a diagram illustrating a processing flow of the information processing system according to the example embodiment of the present disclosure.

Next, details of processing of the information processing system will be described with reference to Fig. 5. It is assumed that face information (face feature) and credit card information on the subject have already been recorded in the mobile terminal 6 carried by the subject based on the description in steps S1 and S10 described above.

The control unit 11 of the information processing device 1 issues a cancelable conversion key as a key common to all customers with restrictions such as limited to the current day (step S101). The cancelable conversion key is issued once a day. The information processing device 1 stores the issued cancelable conversion key of the day.

When entering the facility, the subject brings the mobile terminal 6 in which the face information on the subject is recorded close to the first registration device 2 installed at the entrance of the facility or the like. Instead of the mobile terminal 6, a storage medium (an IC card or the like) that stores face information (1) may be used. The first registration device 2 reads the ID of the subject and the face information (1) from the mobile terminal 6 (step S102).

The imaging device 5 of the first registration device 2 images the face of the approaching subject, extracts the feature of the face of the subject, and generates the face information (2) including the feature of the face (step S103). The first registration device 2 collates the face information (1) with the face information (2) to confirm that the subject is the user himself/herself of the facility (step S104).

If the face information (1) and face information (2) are successfully collated, the first registration device 2 acquires a cancelable conversion key stored in the information processing device 1. The first registration device 2 generates concealed biometric information (3) obtained by performing cancelable conversion on the face information (1) or the face information (2) using the cancelable conversion key. The first registration device 2 transmits the ID of the subject and the concealed biometric information (3) to the information processing device 1. The biometric information registration unit 12 of the information processing device 1 records the ID of the subject and the concealed biometric information (3) in a temporary storage database (DB) or the like provided in the information processing device 1 (step S105).

The first registration device 2 inputs the feature of the face included in the face information (1) to a predetermined function and issues a token. The first registration device 2 generates an encryption key from the token (step S106). The first registration device 2 transmits the token and the encryption key to the information processing device 1. The control unit 11 of the information processing device 1 records the token and the encryption key in a temporary storage database (DB) or the like in association with the ID of the subject and the concealed biometric information (3). The token may be used as an ID of the subject.

In a case where the subject is accompanied by a family member such as a child, the subject prompts the companion to register the face information using the first registration device 2. The imaging device 5 of the first registration device 2 images a face of the approaching companion, extracts the feature of the face of the companion, and generates face information (4) including the feature of the face (step S107).

The first registration device 2 generates concealed biometric information (5) obtained by performing cancelable conversion on the face information (4) using the cancelable conversion key. The first registration device 2 transmits the ID of the subject and the concealed biometric information (5) of the companion to the information processing device 1. The biometric information registration unit 12 of the information processing device 1 records the concealed biometric information (5) on the companion in the temporary storage DB or the like provided in the information processing device 1 in association with the ID of the subject or the concealed biometric information (3) (step S108).

When the registration of the concealed biometric information on the subject and the companion is completed, the subject and the companion use the facility. While using the facility, the subject or the companion purchases products or uses a paid service at each store. That is, a consumption subject such as the subject or the companion performs one or more monetary consumption activities in the facility. When a product is purchased or a paid service is used, the subject or the companion uses the second registration device 3.

The second registration device 3 images the face of the consumption subject as the subject or the companion, extracts the feature of the face of the consumption subject, and performs the cancelable conversion on the face information including the feature of the face using the cancelable conversion key to generate concealed biometric information (6) (step S109). The second registration device 3 transmits an authentication request including the concealed biometric information (6) to the information processing device 1. The consumption target information registration unit 13 of the information processing device 1 determines whether the concealed biometric information (3) and the concealed biometric information (5) associated to the concealed biometric information (6) included in the authentication request are registered in the temporary storage DB (step S110). In a case where the concealed biometric information (3) or the concealed biometric information (5) associated to the concealed biometric information (6) is registered, the consumption target information registration unit 13 transmits successful authentication to the second registration device 3. In a case where the concealed biometric information (3) or the concealed biometric information (5) associated to the concealed biometric information (6) is not registered, the consumption target information registration unit 13 transmits authentication failure to the second registration device 3.

In a case where the authentication is successful, the second registration device 3 accepts the registration of the consumption target information from a clerk or the like because the consumption subject is the user himself/herself of the facility. The consumption target information may include information, a price, a quantity of a sold product, a type and a price of a used service, and the like.

The second registration device 3 generates an encrypted face image (concealed face image) obtained by encrypting the face image (subject or companion) of the consumption subject imaged at the time of generating the concealed biometric information (6) using the encryption key generated in step S106. The second registration device 3 transmits a registration request for the encrypted face image and the consumption target information to the information processing device 1. The consumption target information registration unit 13 registers the encrypted face image and the consumption target information in the shopping information DB (step S111). When the consumption subject such as the subject or the companion purchases a product or uses a paid service at each store, the consumption target information and the face image are repeatedly registered. The encrypted face image and the consumption target information may be registered by the information processing device 1 in association with the ID of the subject, the concealed biometric information (3), and the concealed biometric information (5) of the companion.

Then, when the subject or the companion leaves the facility, the subject brings the mobile terminal 6 in which the face information on the subject is recorded close to the payment device 4 installed at the exit or the like of the facility. Instead of the mobile terminal 6, a storage medium (an IC card or the like) that stores face information (1) may be used. The payment device 4 reads the ID and the face information (1) of the subject from the mobile terminal 6 (step S112).

The imaging device 5 of the payment device 4 images the face of the approaching subject, extracts the feature of the face of the subject, and generates face information (7) including the feature of the face (step S113). The first registration device 2 collates the face information (1) with the face information (7) to confirm that the subject is the user himself/herself of the facility (step S114).

Upon confirming in step S114 that the subject is the user himself/herself of the facility, the payment device 4 transmits a confirmation request including the ID of the subject to the information processing device 1. The confirmation unit 14 of the information processing device 1 transmits the encrypted face image, the consumption target information, and the encryption key registered in association with the ID of the subject to the payment device 4. The payment device 4 decrypts the encrypted face image with the encryption key to restore the face image of the consumption subject (step S115). The payment device 4 displays the face image of the consumption subject and the consumption target information on a display or the like (step S116). The payment device 4 may present the face image of the consumption subject to the subject in a case of acquiring the confirmation request for the face image associated to the predetermined request from the subject. The processing of the payment device 4 may be performed by the information processing device 1. That is, when collectively paying the consumption target information indicating the consumption target, the confirmation unit 14 of the information processing device 1 may authenticate the subject using the biometric information on the subject recorded in advance in the storage means carried by the subject and the newly acquired biometric information on the subject, and may present the consumption target information and the face image of the consumption subject unconcealed with the encryption key to the subject in a case where the authentication is successful. The confirmation unit 14 may acquire a confirmation request for a face image associated to a predetermined request from the subject, and transmit the face image of the consumption subject to the payment device 2 in order to present the face image to the subject if the authentication is successful. In this case, the payment device 2 displays the face image of the consumption subject. As a result, the subject can confirm the consumption target information and the face image of the consumption subject having consumed the consumption target indicated by the consumption target information (the face image of the subject himself/herself or the companion). As a result, the subject can confirm at a glance who has purchased or used the service.

Thereafter, the payment device 4 performs payment processing for the subject by using the consumption target information (step S117). As a result, it is possible to collectively perform payment when the consumption subject performs the consumption behavior using the facility. When the payment processing is completed, the payment device 4 permits the exit from the facility (step S118). For example, the payment device 4 may perform control to open an exit gate. Thereafter, the payment device 4 transmits a request for deleting the concealed biometric information, the face image, the token, and the encryption key associated with the consumption target information subjected to the payment processing to the information processing device 1. The cancellation processing unit 15 of the information processing device 1 deletes the concealed biometric information, the face image, the token, and the encryption key registered in the DB or the like. As a result, the biometric information and the face image of the subject and the companion who have used the facility are deleted, and it is possible to prevent information leakage of high-security information such as the biometric information and the face image.

The cancellation processing unit 15 of the information processing device 1 may perform cancellation processing of the cancelable conversion key issued once a day at a predetermined timing. For example, the cancellation processing unit 15 detects cancellation activation related to biometric information based on an instruction from an administrator. The cancellation processing unit 15 rewrites the cancelable conversion key issued once a day based on the detection of cancellation activation. Alternatively, the cancellation processing unit 15 deletes the cancelable conversion key issued once a day from the storage unit of the own device based on detection of cancellation activation.

Generation of the concealed biometric information using the cancelable conversion key will be described.

Concealed biometric information T is generated in the first registration device 2 by inputting the face features of the subject and the companion acquired by the first registration device 2 and a cancelable conversion key K to a one-way function F. Then, at the time of authentication by the second registration device 3, the second registration device 3 generates concealed biometric information T' by inputting the acquired face features of the subject and the companion and a cancelable conversion key K' to the one-way function F. In step S110 described above, when determining whether the concealed biometric information (3) and the concealed biometric information (5) associated to the concealed biometric information (6) included in the authentication request are registered in the temporary storage DB, the consumption target information registration unit 13 of the information processing device 1 may sequentially compare the concealed biometric information T stored in the temporary storage DB with the concealed biometric information T' generated at the time of authentication, and determine that the authentication is successful in a case where the similarity is equal to or more than a predetermined threshold. Such a cancelable conversion key is a known technique, and authentication using a known cancelable conversion key is performed in the above-described example embodiment.

By concealing and registering the biometric information without registering the biometric information as it is in the DB, the concealed biometric information can be temporarily stored in the DB with security. In addition, since the concealed biometric information is concealed even if the concealed biometric information is leaked, it is possible to prevent the biometric information on the subject or the companion who has used the facility from being exposed as it is.

According to the processing of the information processing system described above, the subject who uses the facility can perform the consumption activity in the facility using his/her own face image registered in the storage medium carried by the subject such as the mobile terminal 6, and can collectively make the payment at the end.

### <Second Example Embodiment>

In the first example embodiment, a feature of a face is extracted from a face image of a subject or a companion, concealed biometric information is generated based on the feature of the face, and registered in the temporary storage DB of the information processing device 1. However, other biometric information such as a fingerprint, a voiceprint, and a palm vein pattern may be used instead of the face feature of the subject or the companion, concealed biometric information may be generated and registered in a temporary storage DB of an information processing device 1, and the other biometric information may be similarly used at the time of authentication. As a result, the subject who uses the facility can perform a consumption activity in a facility using biometric information other than the face.

### <Third Example Embodiment>

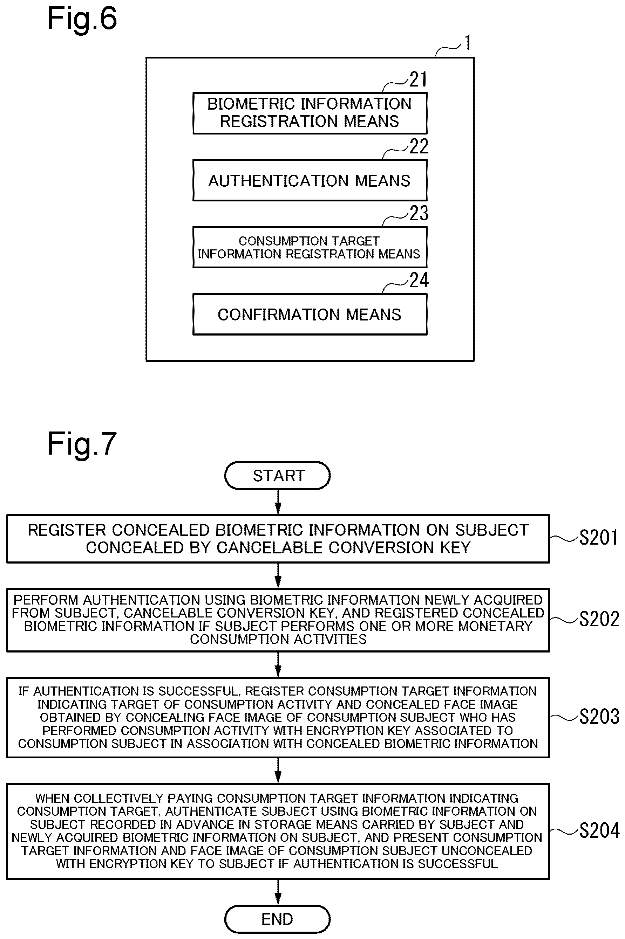

Fig. 6 is a functional block diagram illustrating a minimum configuration of an information processing device according to an example embodiment of the present disclosure.

Fig. 7 is a diagram illustrating a processing flow by the information processing device having a minimum configuration according to the example embodiment of the present disclosure.

The information processing device 1 includes at least biometric information registration means 21, authentication means 22, consumption target information registration means 23, and confirmation means 24.

The biometric information registration means 21 registers the concealed biometric information on the subject concealed by the cancelable conversion key (step S201).

The authentication means 22 performs authentication using the biometric information newly acquired from the subject, the cancelable conversion key, and the registered concealed biometric information in a case where the subject has performed one or more monetary consumption activities (step S202).

In a case where the authentication is successful, the consumption target information registration means 23 registers the consumption target information indicating the target of the consumption activity and the concealed face image obtained by concealing the face image of the consumption subject who has performed the consumption activity with the encryption key associated to the consumption subject in association with the concealed biometric information (step S203).

When collectively paying the consumption target information indicating the consumption target, the confirmation means 24 authenticates the subject using the biometric information on the subject recorded in advance in the storage means carried by the subject and the newly acquired biometric information on the subject, and presents the consumption target information and the face image of the consumption subject unconcealed with the encryption key to the subject in a case where the authentication is successful (step S204).

According to the information processing device having the minimum configuration, it is possible to safely manage, on the facility side, the information on the feature of the face of the subject used when the consumption targets consumed by the plurality of consumption activities in the facility are collectively paid.

The program may be for realizing a part of the functions described above. The above-described function may be achieved by a combination with a program already recorded in the computer system, that is, a so-called difference file (difference program).

### (Hardware configuration)

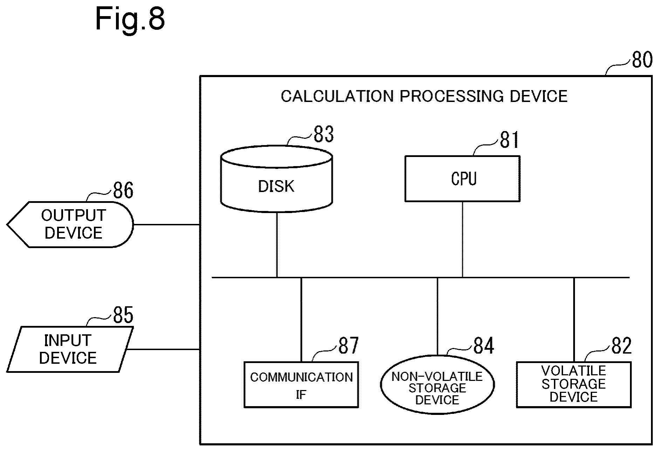

Fig. 8 is a block diagram schematically illustrating a hardware configuration example of a calculation processing device 80 capable of realizing the information processing device 1, the first registration device 2, the second registration device 3, and the payment device 4 according to each example embodiment of the present disclosure.

A configuration example of hardware resources that implement the information processing device 1, the first registration device 2, the second registration device 3, and the payment device 4 using one calculation processing device (information processing device, computer) will be described.

The calculation processing device 80 includes a central processing unit (hereinafter, referred to as "CPU") 81, a volatile storage device 82, a disk 83, a non-volatile recording medium 84, and a communication interface (hereinafter, referred to as "communication IF") 87. The calculation processing device 80 may be connectable to an input device 85 and an output device 86. The calculation processing device 80 can transmit and receive information to and from other calculation processing devices and communication devices via the communication IF 87.

The non-volatile recording medium 84 is a computer readable compact disc (Compact_Disc) or digital versatile disc (Digital_Versatile_Disc), for example. The non-volatile recording medium 84 may be a universal serial bus memory (USB memory), a solid state drive (Solid_State_Drive), or the like. The non-volatile recording medium 84 stores such programs even when power is not supplied, and can be carried out. The non-volatile recording medium 84 is not limited to the above-described medium. Instead of the non-volatile recording medium 84, the programs may be carried out via the communication IF 87 and the communication network.

The volatile storage device 82 is computer readable and can temporarily store data. The volatile storage device 82 is a memory such as a dynamic random access memory (DRAM) or a static random access memory (SRAM).

That is, the CPU 81 copies a software program (computer program: hereinafter, simply referred to as "program") stored in the disk 83 to the volatile storage device 82 at the time of execution and executes an arithmetic process. The CPU 81 reads data necessary for program execution from the volatile storage device 82. When display is required, the CPU 81 displays an output result on the output device 86. In a case where a program is input from outside, the CPU 81 reads the program from the input device 85. The CPU81 interprets and executes an analysis program (Fig. 4 or Fig. 5) in the volatile storage device 82 associated to the function (processing) represented by each unit illustrated in Fig. 2 (or Fig. 3). The CPU 81 executes the process described in each of the above-described example embodiments. That is, here, it can be understood that each of the above-described example embodiments can also be implemented by such an analysis program. It can be understood that each example embodiment of the present disclosure can be implemented by a non-volatile computer-readable recording medium in which the analysis program is recorded.

The information processing device 1, the first registration device 2, the second registration device 3, and the payment device 4 may include one or more calculation processing devices 80.

### Reference Signs List

- 1: information processing device
- 2: first registration device
- 3: second registration device
- 4: payment device
- 5: imaging device
- 11: control unit
- 12: biometric information registration unit
- 13: consumption target information
- 14: confirmation unit
- 15: cancel processing unit
- 16: authentication unit

## Claims

1. An information processing device comprising:
biometric information registration means for registering concealed biometric information on a subject concealed by a cancelable conversion key;
authentication means for performing authentication using biometric information newly acquired from the subject, the cancelable conversion key, and the registered concealed biometric information in a case where the subject has performed one or a plurality of monetary consumption activities;
consumption target information registration means for registering, in a case where the authentication is successful, consumption target information indicating a target of the consumption activity and a concealed face image obtained by concealing a face image of a consumption subject who has performed the consumption activity with an encryption key associated to the consumption subject, in association with the concealed biometric information; and
confirmation means for authenticating the subject using biometric information on the subject recorded in advance in storage means carried by the subject and newly acquired biometric information on the subject when payment related to the consumption target information is collectively performed, and presenting the consumption target information and a face image of the consumption subject unconcealed from the concealed face image by the encryption key to the subject when the authentication is successful.

2. The information processing device according to claim 1, wherein
the biometric information registration means registers concealed biometric information on the subject concealed by the cancelable conversion key and concealed biometric information on a companion of the subject concealed by the cancelable conversion key in association with each other,
the authentication means performs authentication using biometric information newly acquired from the consumption subject, the cancelable conversion key, and the registered concealed biometric information in a case where the consumption subject indicating either the subject or the companion performs one or a plurality of monetary consumption activities, and
in a case where the authentication is successful, the consumption target information registration means registers consumption target information indicating a target of the consumption activity and an encrypted face image obtained by concealing a face image of a consumption subject who has performed the consumption activity with an encryption key associated to the consumption subject in association with the concealed biometric information.

3. The information processing device according to claim 1 or 2, further comprising
cancellation processing means for performing cancellation processing on the cancelable conversion key when predetermined cancellation related to biometric information is activated.

4. The information processing device according to claim 3, wherein
the cancellation processing means deletes the registered biometric information.

5. An information processing method comprising:
registering concealed biometric information on a subject concealed by a cancelable conversion key;
performing authentication using biometric information newly acquired from the subject, the cancelable conversion key, and the registered concealed biometric information in a case where the subject has performed one or a plurality of monetary consumption activities;
registering, in a case where the authentication is successful, consumption target information indicating a target of the consumption activity and a concealed face image obtained by concealing a face image of a consumption subject who has performed the consumption activity with an encryption key associated to the consumption subject, in association with the concealed biometric information; and
authenticating the subject using biometric information on the subject recorded in advance in storage means carried by the subject and newly acquired biometric information on the subject when payment related to the consumption target information is collectively performed, and presenting the consumption target information and a face image of the consumption subject unconcealed from the concealed face image by the encryption key to the subject when the authentication is successful.

6. The information processing method according to claim 5, further comprising:
registering concealed biometric information on the subject concealed by the cancelable conversion key and concealed biometric information on a companion of the subject concealed by the cancelable conversion key in association with each other;
performing authentication using biometric information newly acquired from the consumption subject, the cancelable conversion key, and the registered concealed biometric information in a case where the consumption subject indicating either the subject or the companion performs one or a plurality of monetary consumption activities; and
in a case where the authentication is successful, registering consumption target information indicating a target of the consumption activity and an encrypted face image obtained by concealing a face image of a consumption subject who has performed the consumption activity with an encryption key associated to the consumption subject in association with the concealed biometric information.

7. The information processing method according to claim 5 or 6, further comprising
performing cancellation processing on the cancelable conversion key when predetermined cancellation related to biometric information is activated.

8. The information processing method according to claim 7, further comprising
deleting the registered biometric information.

9. An information processing system comprising:
biometric information registration means for registering concealed biometric information on a subject concealed by a cancelable conversion key;
authentication means for performing authentication using biometric information newly acquired from the subject, the cancelable conversion key, and the registered concealed biometric information in a case where the subject has performed one or a plurality of monetary consumption activities;
consumption target information registration means for registering, in a case where the authentication is successful, consumption target information indicating a target of the consumption activity and a concealed face image obtained by concealing a face image of a consumption subject who has performed the consumption activity with an encryption key associated to the consumption subject, in association with the concealed biometric information; and
confirmation means for authenticating the subject using biometric information on the subject recorded in advance in storage means carried by the subject and newly acquired biometric information on the subject when payment related to the consumption target information is collectively performed, and presenting the consumption target information and a face image of the consumption subject unconcealed from the concealed face image by the encryption key to the subject when the authentication is successful.

10. A storage medium storing a program for causing a computer of an information processing device to function as:
biometric information registration means for registering concealed biometric information on a subject concealed by a cancelable conversion key;
authentication means for performing authentication using biometric information newly acquired from the subject, the cancelable conversion key, and the registered concealed biometric information in a case where the subject has performed one or a plurality of monetary consumption activities;
consumption target information registration means for registering, in a case where the authentication is successful, consumption target information indicating a target of the consumption activity and a concealed face image obtained by concealing a face image of a consumption subject who has performed the consumption activity with an encryption key associated to the consumption subject, in association with the concealed biometric information; and
confirmation means for authenticating the subject using biometric information on the subject recorded in advance in storage means carried by the subject and newly acquired biometric information on the subject when payment related to the consumption target information is collectively performed, and presenting the consumption target information and a face image of the consumption subject unconcealed from the concealed face image by the encryption key to the subject when the authentication is successful.
